# EUROPEAN PATENT APPLICATION

(11) **EP 4 603 294 A1**
(43) Date of publication of application: **20.08.2025**
(21) Application number: 23902864.0
(22) Date of filing: 30.11.2023
(51) Int. Cl.: B41M 1/34, C03C 8/00

(54) **METHOD FOR PRODUCING GLASS DECORATED ON BOTH SIDES AND A GLASS DECORATED ACCORDING TO SAID METHOD**

(30) Priority: 13.12.2022 ES 202231064
(71) Applicant: Torrecid, S.A., 12110 Alcora (Castellón) (ES)
(72) Inventor: RUIZ VEGA, Óscar, 12110 Alcora (Castellón) (ES)
(74) Representative: Carlos Hernando, Borja
(86) International application number: PCT/ES2023/070712
(87) International publication number: WO 2024/126880

(57) **Abstract**

The present invention discloses a method for producing a glass decorated on both sides for decorative and/or functional purposes that comprises printing at least one ink on the side C1 of the glass, characterised in that it has a crystallisation temperature of between 525°C and 650°C, followed by a first thermal treatment at a maximum temperature of between 500°C and 750°C. Next, a process for depositing a coating on the side C2 of the glass is carried out, wherein said coating has a softening temperature equal to or lower than the softening temperature of the ink deposited on the side C1. Lastly, the glass is subjected to a second thermal treatment at a maximum temperature equal to or lower than the maximum temperature of the first thermal treatment, resulting in a glass decorated on both sides.

## Description

The present invention relates to a method for producing a glass decorated on both sides for decorative and/or functional purposes and to a glass obtained according to said method.

### STATE OF THE ART

In the current state of the art of glass decoration processes, it would be desirable, due to technical and/or aesthetic requirements, to obtain glass decorated on both sides in a quick, cost-effective, and environmentally-friendly manner.

In the methods currently used, both the ink compositions and the method used for their application are focused on decorating only one side of the glass, with long waits, additional treatments, or special tools being necessary to decorate the second side.

In fact, the application of inks on a second side of the glass, without taking into account other technical aspects, such as crystallisation, softening and firing temperatures, leads to the decorated side coming into contact with the handling element that transports the substrate inside the furnace being damaged, with a partial or total loss of the deposited decoration.

These problems were observed by the inventors, for example, in ink compositions according to patents ES2424775B1 and ES2453390B1 used for decorating glass in automated lines for producing decorated glass.

Therefore, it is not possible, in the current state of the art, to deposit decorations on both sides of a glass correctly and without affecting either side.

The present invention resolves and overcomes the aforementioned drawbacks and limitations.

### GENERAL DESCRIPTION OF THE INVENTION

Throughout the invention and the claims, the word "comprises" and variants thereof do not seek to exclude other technical features, additives, components, or steps. Furthermore, the word "comprises" includes the case "consists of". Other objects, advantages, and features of the invention will become apparent to those skilled in the art due to the description and in part due to the practice of the invention.

In the field of the glass industry, as in other sectors, there is a trend towards personalisation and the generation of new products. This translates into the need to adjust products to customer demand and to achieve complete flexibility in terms of production. In this sense, the present invention comes to resolve the current limitations described above in an industrial and competitive manner.

Therefore, the present invention has as its first object of invention, according to claim 1, a method for producing a glass decorated on both sides that comprises the following steps:
a. supplying a glass;
b. printing at least a first ink on side C1 of the glass by means of a first printing station, with a predefined design and a basis weight of between 10 g/m² and 500 g/m², wherein said ink has a crystallisation temperature of between 525°C and 650°C;
c. introducing the glass in a furnace and performing a first thermal treatment at a maximum temperature of between 500°C and 750°C;
d. taking the glass out of the furnace and turning it over;
e. depositing a coating with a predefined design on side C2 of the glass, and wherein said coating has a softening temperature equal to or lower than the softening temperature of the ink deposited on side C1 of the glass, wherein the selection of the equipment for depositing this coating will depend on several factors such as the manner in which the material to be deposited is presented (ink, solid, solution, etc.), the required layer thickness, the functionality of the layer, etc., thereby enabling the use of equipment such as ink-jet, screen printing, airbrush, roller, veil application, bell, chemical vapour deposition, physical vapour deposition, magnetron sputtering, among others;
f. introducing the glass in a furnace and performing a second thermal treatment at a maximum temperature equal to or lower than the maximum temperature of the first thermal treatment, resulting in a glass decorated on both sides.

The present invention also has as its object, according to claim 16, a glass decorated on both sides manufactured according to the method described in the present invention.

The term "predefined design", as used in the present invention, refers to a printing pattern defining the region where the coating or coatings are going to be deposited on the side of the glass. This pattern may cover both a percentage of and the entire surface of the side of the glass.

The term "crystallisation temperature", as used in the present invention, refers to the temperature at which one or more crystalline structures are formed due to the effect of a thermal treatment.

The terms "coating" or "coatings", as used in the present invention, refer to any application of one or more layers of an organic and/or inorganic material which, once deposited on the glass and a thermal treatment is performed, provides a technical and/or aesthetic property. Said coating or coatings may comprise, for example, at least one or more inks and/or at least one or more particles, wherein said particles may be, for example, quartz, corundum, zirconium silicate, mica, inorganic pigment, or crushed frit particles, or a mixture thereof.

The term "softening temperature", as used in the present invention, refers to the temperature at which a coating deposited on the surface of the glass goes from a rigid, non-deformable state in which it adheres to the surface, to a soft, deformable state capable of completely or partially losing adhesion to the surface of the glass.

The terms "decorated" and "decoration", as used in the present invention, refer to a glass coated for decorative and/or functional purposes providing both aesthetic and technical aspects.

The designations C1 and C2 refer to the first side of the glass that is decorated, C1, and to the second side of the glass that is decorated, C2, respectively. Said designations do not limit any of the physical characteristics of the undecorated glass. In that sense, side C1 comprises at least one or more inks and may further comprise at least one or more particles, wherein said particles may be, for example, quartz, corundum, zirconium silicate, mica, inorganic pigment, or crushed frit particles, or a mixture thereof. Similarly, the coating of side C2 comprises at least one or more inks and/or at least one or more particles, wherein said particles may be, for example, quartz, corundum, zirconium silicate, mica, inorganic pigment, or crushed frit particles, or a mixture thereof.

The present invention includes a preferred embodiment wherein the coating on side C2 of the glass consists of printing at least a second ink. In that sense, the method comprises the following steps:
a. supplying a glass;
b. printing at least a first ink on side C1 of the glass by means of a first printing station, with a predefined design and a basis weight of between 10 g/m² and 500 g/m², wherein said ink has a crystallisation temperature of between 525°C and 650°C;
c. introducing the glass in a furnace and performing a first thermal treatment at a maximum temperature of between 500°C and 750°C;
d. taking the glass out of the furnace and turning it over;
e. printing at least a second ink on side C2 of the glass, by means of a printing station, with a predefined design and a basis weight of between 20 g/m² and 500 g/m², wherein said second ink has a softening temperature equal to or lower than the softening temperature of the first ink deposited on side C1 of the glass;
f. introducing the glass in a furnace and performing a second thermal treatment at a maximum temperature equal to or lower than the maximum temperature of the first thermal treatment, resulting in a glass decorated on both sides.

According to this preferred embodiment, the ink or combination of inks which are printed on both sides can provide different aesthetic effects once the thermal treatment is performed. In this sense, the ink or combination of inks can provide a chromatic, gold plating, silver plating, mica-based metal plating, lustre, acid, matte, gloss, satin matte effect, or a mixture thereof. The first and second inks may have the same composition, providing the same aesthetic effect and/or the same chromatic effect. Similarly, the present invention also contemplates that the ink or combination of inks which are printed on both sides can provide functional characteristics once the thermal treatment is performed. In this sense, the ink or combination of inks can provide technical effects such as conductive, dielectric, electroluminescent, photoluminescent, bactericidal, viricidal, non-slip, anti-reflective, anti-tracking and infrared light reflection property, among others. According to this option, the first and second inks may have the same composition, providing the same aesthetic, chromatic, and/or technical effect.

When the ink or inks are deposited, printing can be performed by means of different techniques combined with one another. In this sense, the printing techniques can be ink-jet, airbrush, roller, veil application, screen printing, or bell printing techniques, or combinations thereof. In that sense, for example, both the first ink or inks on side C1 and the second ink or inks on side C2 of the glass are deposited by means of ink-jet. In another option, the first ink or inks are deposited on side C1 of the glass by means of ink-jet, and the second ink or inks are deposited on side C2 of the glass by means of airbrush.

In the event that the printing technique used to deposit the ink or inks on side C1 and side C2 is by means of ink-jet, the possibility that printing is performed with the same printing station is contemplated. That is possible because the ink-jet equipment may comprise two or more print bars arranged in parallel, wherein each bar corresponds to a line of heads used to inject a type of ink.

Also in relation to the ink-jet technique, it should be indicated that the printing stations in which this technology is used discharge droplets of a fixed or variable volume on the side of the glass, the volume of which droplets is preferably comprised between 3 and 200 picolitres.

Similarly, and in relation to the thermal treatment of the ink or inks on side C1 and side C2, the possibility that the thermal treatment is performed in the same or different furnaces is contemplated.

Another preferred embodiment of the present invention consists of a method for producing a glass decorated on both sides, wherein after the steps of introducing the glass in a furnace, performing a first thermal treatment, removing it, and turning it over, the following additional steps are performed. First, a third ink with adhesive properties is printed on side C2 of the glass by means of an ink-jet, airbrush, roller, or screen printing station, with a predefined design and a basis weight of between 20 g/m² and 200 g/m². Then, crushed frit particles are deposited on said third ink with adhesive properties by means of a particle deposition station, with a predefined design and a basis weight of between 100 g/m² and 700 g/m², wherein the crushed frit particles have a diameter of between 1 micrometre and 300 micrometres and a softening temperature equal to or lower than the softening temperature of the first ink previously deposited on side C1.

Additionally, during the step of depositing the particles, the possibility that these particles are deposited not only on the third ink with adhesive properties but alternatively on all of side C2 of the glass, both in the regions where the third ink with adhesive properties has been deposited and in the regions where it has not been deposited, is contemplated. In this case, after this step, preferably, said side C2 of the glass is subjected to a suction or blowing device to remove the particles that are not adhered to the third ink with adhesive properties, where it is possible to use any other particle removal device. This embodiment allows, advantageously, more cost-effective and readily available particle application equipment to be used, which can deposit a curtain of particles without being required to distinguish, mark off, or select the deposition region.

The term "crushed frit", as used in the present invention, refers to a frit which has been subjected to a grinding and sieving to adjust it to a certain particle diameter interval.

Additionally, the present invention also contemplates a preferred embodiment wherein, after the step of depositing a second ink on side C2 of the glass, the following additional steps are performed. First, a third ink with adhesive properties is printed on side C2 of the glass by means of an ink-jet, airbrush, roller, or screen printing station, with a predefined design and a basis weight of between 20 g/m² and 200 g/m². Then, crushed frit particles are deposited on said third ink with adhesive properties by means of a particle deposition station, with a predefined design and a basis weight of between 100 g/m² and 700 g/m², wherein the crushed frit particles have a diameter of between 1 micrometre and 300 micrometres and a softening temperature equal to or lower than the softening temperature of the first ink deposited on side C1 of the glass.

It should be pointed out that within this invention, there is also the option that the printing of the third ink with adhesive properties and the deposition of crushed frit particles are performed by means of digital printing with dry particle deposition equipment.

Alternatively, it is possible that in a step after printing at least a first ink, or more than one ink, on side C1, at least one or more particles are deposited on said side, wherein said particles may be, for example, quartz, corundum, zirconium silicate, mica, inorganic pigment, or crushed frit particles, or a mixture thereof.

Similarly, it is possible to deposit on side C2, in an alternative method for printing a second ink, at least one or more particles, wherein said particles may be, for example, quartz, corundum, zirconium silicate, mica, inorganic pigment, or crushed frit particles, or a mixture thereof.

The processes for depositing coatings by means printing inks or others require, in some cases, a drying or curing after each deposition. In this sense, the present invention comprises the possibility that, after printing each first and second ink on side C1 or C2 respectively, the glass is introduced in a drying station at a temperature of between 45°C and 250°C. Furthermore, this drying and/or curing can be by air or also with a lamp emitting infrared radiation and/or a lamp emitting ultraviolet radiation.

Lastly, it should be indicated that the method for producing a glass decorated on both sides according to the present invention does not limit the inclusion or incorporation of other processes or steps that provide other aesthetic or technical properties in addition to those that are protected in this invention, both before and after each thermal treatment.

### DESCRIPTION OF THE FIGURES

Figure 1 schematically depicts the method for producing a glass decorated on both sides according to the invention.
Figure 2 schematically depicts the method for producing a glass decorated on both sides where the coating on side C2 consists of printing at least a second ink by means of a printing station according to the invention.
Figure 3 schematically depicts the method for producing a glass decorated on both sides in which, after the step of introducing the glass in the furnace and performing a first thermal treatment, a printing station for printing a third ink with adhesive properties and a particle deposition station for the deposition of crushed frit particles are additionally included according to the invention.
Figure 4 schematically depicts the method for producing a glass decorated on both sides in which, after the step of depositing a second ink on side C2 of the glass, a printing station for printing a third ink with adhesive properties and a particle deposition station for the deposition of crushed frit particles are additionally included according to the invention.
Figure 5 schematically depicts the method for producing a glass decorated on both sides in which, after the step of printing a first and/or second ink on side C1 and/or C2, a drying or curing station is additionally included.
Figure 6 schematically depicts the glass decorated on both sides, wherein side C1 comprises a first ink and side C2 a coating according to the invention.
Figure 7 schematically depicts the glass decorated on both sides, wherein side C1 comprises a first ink and side C2 a second ink, according to a first embodiment of the invention.
Figure 8 schematically depicts the glass decorated on both sides, wherein side C1 comprises a first ink and side C2 a third ink with adhesive properties and crushed frit particles, according to a second embodiment of the invention.
Figure 9 schematically depicts the glass decorated on both sides, wherein side C1 comprises a first ink and side C2 comprises a second ink, a third ink with adhesive properties and crushed frit particles, according to a third embodiment of the invention.

### PREFERRED EMBODIMENTS

In order to better understand the features of the invention, next, in a non-limiting manner, some preferred embodiments are described in reference to the attached figures. In this sense, the figures are provided by way of illustration and are not intended to be limiting of the present invention. Furthermore, the present invention covers all the possible combinations of particular preferred embodiments indicated herein.

The present invention consists of a method for producing a glass decorated on both sides that comprises the following steps:
a. supplying a glass (2);
b. printing at least a first ink (3) on side C1 of the glass (2) by means of a first printing station (4), with a predefined design and a basis weight of between 10 g/m² and 500 g/m², wherein said first ink (3) has a crystallisation temperature of between 525°C and 650°C;
c. introducing the glass in a furnace (5) and performing a first thermal treatment at a maximum temperature of between 500°C and 750°C;
d. taking the glass out of the furnace and turning it over (V);
e. depositing a coating (6) with a predefined design on side C2 of the glass (2) by means of the corresponding equipment (7), and wherein said coating has a softening temperature equal to or lower than the softening temperature of the first ink (3) deposited on side C1 of the glass (2);
f. introducing the glass in a furnace (8) and performing a second thermal treatment at a maximum temperature equal to or lower than the maximum temperature of the first thermal treatment, resulting in a glass with applications on both sides (2a).

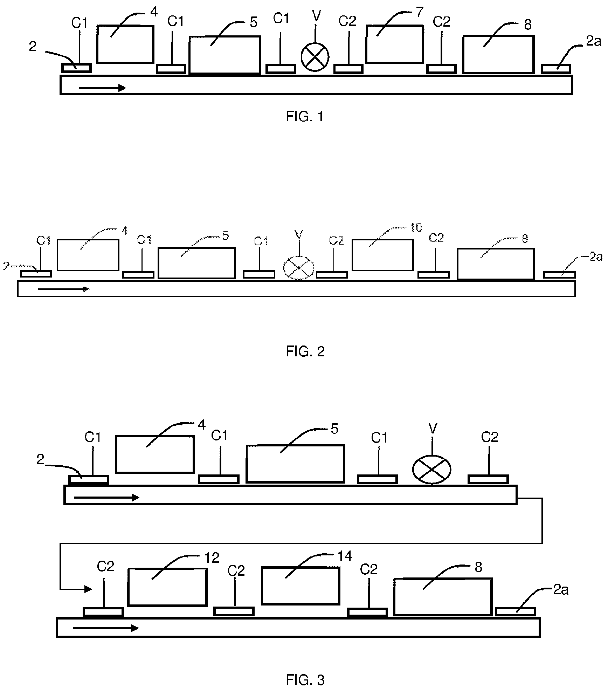

A preferred embodiment is Figure 1, which schematically depicts the method for producing a glass decorated on both sides. In this case, the method follows the direction indicated by the arrow, i.e., from left to right, starting with the supply of the glass (2). Then said glass (2) enters the printing station (4) where at least a first ink (3) is printed on side C1, with a predefined design and a basis weight of between 10 g/m² and 500 g/m², wherein said first ink (3) has a crystallisation temperature of between 525°C and 650°C. Next, the glass (2) moves on to a furnace (5) where a first thermal treatment is performed at a maximum temperature of between 500°C and 750°C. The glass (2) is taken out of the furnace (5) and turned over (V). Then, the glass (2) moves on to equipment (7) where at least one coating (6) is deposited on side C2 of the glass (2), with a predefined design and a basis weight of between 20 g/m² and 500 g/m², wherein said coating (6) has a softening temperature equal to or lower than the softening temperature of the first ink (3) deposited on side C1 of the glass (2). The method ends with the glass (2) entering a furnace (8) where a second thermal treatment is performed at a maximum temperature equal to or lower than the maximum temperature of the first thermal treatment, such that a glass decorated on both sides (2a) is obtained.

Figure 2 depicts another preferred embodiment for producing a glass decorated on both sides. In this case, the method follows the direction indicated by the arrow, i.e., from left to right, starting with the supply of the glass (2). Then said glass (2) enters the printing station (4) where at least a first ink (3) is printed, with a predefined design and a basis weight of between 10 g/m² and 500 g/m², wherein said first ink (3) has a crystallisation temperature of between 525°C and 650°C. Next, the glass (2) moves on to a furnace (5) where a first thermal treatment is performed at a maximum temperature of between 500°C and 750°C. The glass (2) is taken out of the furnace (5) and turned over (V). Then, the glass (2) moves on to the printing station (10) where at least a second ink (9) is deposited on side C2 of the glass (2), with a predefined design and a basis weight of between 20 g/m² and 500 g/m², wherein said second ink (9) has a softening temperature equal to or lower than the softening temperature of the first ink (3) deposited on side C1 of the glass (2). The method ends with the glass (2) entering a furnace (8) where a second thermal treatment is performed at a maximum temperature equal to or lower than the maximum temperature of the first thermal treatment, such that a glass decorated on both sides (2a) is obtained.

Figure 3 depicts a preferred embodiment for producing a glass decorated on both sides. In this case, the method follows the direction indicated by the arrow, i.e., from left to right, starting with the supply of the glass (2). Then said glass (2) enters the printing station (4) where at least a first ink (3) is printed, with a predefined design and a basis weight of between 10 g/m² and 500 g/m², wherein said first ink (3) has a crystallisation temperature of between 525°C and 650°C. Next, the glass (2) moves on to a furnace (5) where a first thermal treatment is performed at a maximum temperature of between 500°C and 750°C. The glass (2) is taken out of the furnace (5) and turned over (V). Then, a third ink with adhesive properties (11) is printed on side C2 of the glass (2) by means of a third ink-jet, airbrush, roller, or screen printing station (12), with a predefined design and a basis weight of between 20 g/m² and 200 g/m². Next, crushed frit particles (13) are deposited on said third ink with adhesive properties (11) by means of a particle deposition station (14), with a predefined design and a basis weight of between 100 g/m² and 700 g/m², wherein the crushed frit particles have a diameter of between 1 micrometre and 300 micrometres and a softening temperature equal to or lower than the softening temperature of the first ink (3) deposited on side C1 of the glass (2). The method ends with the glass (2) entering a furnace (8) where a second thermal treatment is performed at a maximum temperature equal to or lower than the maximum temperature of the first thermal treatment, such that a glass decorated on both sides (2a) is obtained.

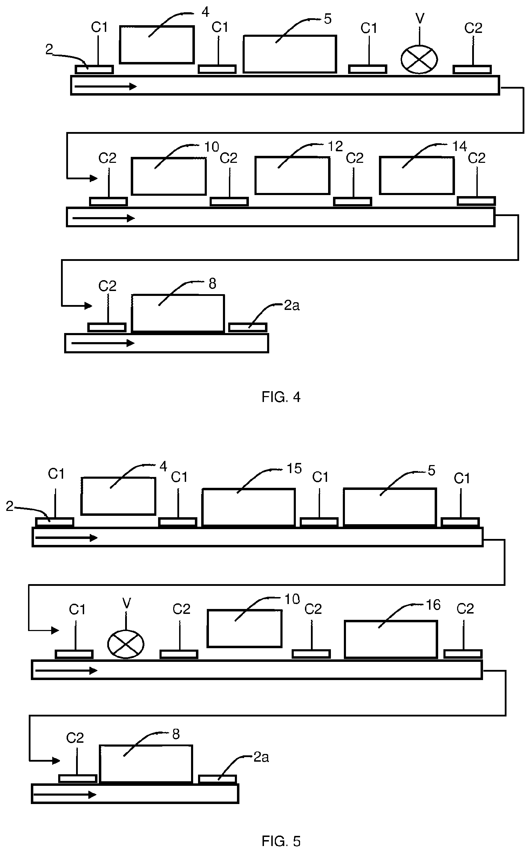

Figure 4 schematically depicts another preferred embodiment for producing a glass decorated on both sides. In this case, the method follows the direction indicated by the arrow, i.e., from left to right, starting with the supply of the glass (2). Then said glass (2) enters the printing station (4) where at least a first ink (3) is printed, with a predefined design and a basis weight of between 10 g/m² and 500 g/m², wherein said first ink (3) has a crystallisation temperature of between 525°C and 650°C. Next, the glass (2) moves on to a furnace (5) where a first thermal treatment is performed at a maximum temperature of between 500°C and 750°C. The glass (2) is taken out of the furnace (5) and turned over (V). Then, the glass (2) moves on to the printing station (10) where at least a second ink (9) is deposited on side C2 of the glass (2), with a predefined design and a basis weight of between 20 g/m² and 500 g/m², wherein said second ink (9) has a softening temperature equal to or lower than the softening temperature of the first ink (3) deposited on side C1 of the glass (2). Next, a third ink with adhesive properties (11) is printed on said side C2 of the glass (2) by means of a third ink-jet, airbrush, roller, or screen printing station (12), with a predefined design and a basis weight of between 20 g/m² and 200 g/m². Then, crushed frit particles (13) are deposited on said third ink with adhesive properties (11) by means of a particle deposition station (14) with a predefined design and a basis weight of between 100 g/m² and 700 g/m², wherein the crushed frit particles have a diameter of between 1 micrometre and 300 micrometres and a softening temperature equal to or lower than the softening temperature of the first ink (3) deposited on side C1 of the glass (2). The method ends with the glass (2) entering a furnace (8) where a second thermal treatment is performed at a maximum temperature equal to or lower than the maximum temperature of the first thermal treatment, such that a glass decorated on both sides (2a) is obtained.

Figure 5 schematically depicts another preferred embodiment for producing a glass decorated on both sides. In this case, the method follows the direction indicated by the arrow, i.e., from left to right, starting with the supply of the glass (2). Then said glass (2) enters the printing station (4) where at least a first ink (3) is printed, with a predefined design and a basis weight of between 10 g/m² and 500 g/m², wherein said first ink (3) has a crystallisation temperature of between 525°C and 650°C. Next, the glass (2) moves on to a drying station (15) at a temperature of between 45°C and 250°C. Then the glass (2) moves on to a furnace (5) where a first thermal treatment is performed at a maximum temperature of between 500°C and 750°C. The glass (2) is taken out of the furnace (5) and turned over (V). Next, the glass (2) moves on to the printing station (10) where at least a second ink (9) is deposited on side C2 of the glass (2), with a predefined design and a basis weight of between 20 g/m² and 500 g/m², wherein said second ink (9) has a softening temperature equal to or lower than the softening temperature of the first ink (3) deposited on side C1 of the glass (2). Then, the glass (2) moves on to a drying station (16) at a temperature of between 45°C and 250°C. The method ends with the glass (2) entering a furnace (8) where a second thermal treatment is performed at a maximum temperature equal to or lower than the maximum temperature of the first thermal treatment, such that a glass decorated on both sides (2a) is obtained.

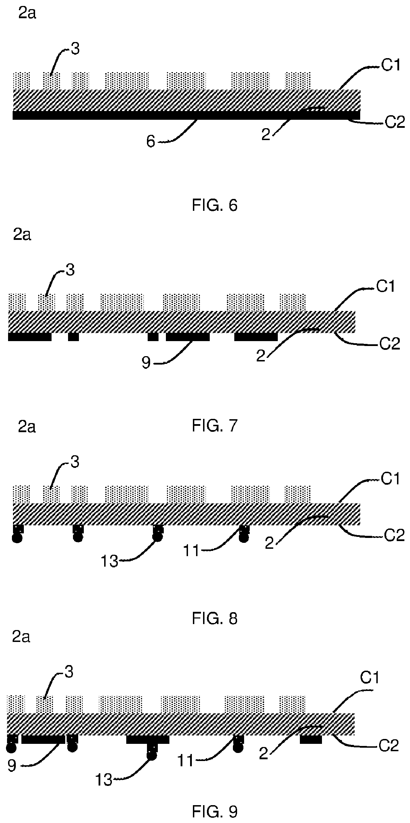

Figure 6 schematically depicts the glass decorated on both sides once subjected to the thermal treatments (2a), resulting from printing at least a first ink (3) on side C1 of the glass (2) and depositing at least one coating (6) on side C2 of the glass (2), according to the invention.

Figure 7 schematically depicts the glass decorated on both sides once subjected to the thermal treatments (2a), resulting from printing at least a first ink (3) on side C1 of the glass (2) and at least a second ink (9) on side C2 of the glass (2), according to the invention.

Figure 8 schematically depicts the glass decorated on both sides once subjected to the thermal treatments (2a), resulting from printing at least a first ink (3) on side C1 of the glass (2) as well as printing a third ink with adhesive properties (11) and depositing the crushed frit particles (13) on side C2 of the glass (2), according to the invention.

Figure 9 schematically depicts the glass decorated on both sides once subjected to the thermal treatments (2a), resulting from printing at least a first ink (3) on side C1 of the glass (2) as well as printing at least a second ink (9), followed by a third ink with adhesive properties (11) and depositing crushed frit particles (13) on side C2 of the glass (2), according to the invention.

## Claims

1. A method for producing a glass decorated on both sides (2) that comprises the following steps:
a. supplying a glass (2);
b. printing at least a first ink (3) on side C1 of the glass (2) by means of a first printing station (4), with a predefined design and a basis weight of between 10 g/m² and 500 g/m², wherein said ink (3) has a crystallisation temperature of between 525°C and 650°C;
c. introducing the glass in a furnace (5) and performing a first -thermal treatment at a maximum temperature of between 500°C and 750°C;
d. taking the glass out of the furnace and turning it over (V);
e. depositing a coating (6) with a predefined design on side C2 of the glass (2) by means of a piece of equipment (7), and wherein said coating has a softening temperature equal to or lower than the softening temperature of the first ink (3) deposited on side C1 of the glass (2);
f. introducing the glass in a furnace (8) and performing a second thermal treatment at a maximum temperature equal to or lower than the maximum temperature of the first thermal treatment, resulting in a glass decorated on both sides (2a).

2. The method according to the preceding claim, wherein side C1 comprises at least one or more particles, wherein said particles may be, for example, quartz, corundum, zirconium silicate, mica, inorganic pigment, or crushed frit particles, or a mixture thereof.

3. The method according to any of the preceding claims, wherein the coating (6) on side C2 comprises at least one or more inks and/or at least one or more particles, wherein said particles may be, for example, quartz, corundum, zirconium silicate, mica, inorganic pigment, or crushed frit particles, or a mixture thereof.

4. The method according to the preceding claim, wherein the coating (6) of side C2 consists of printing at least a second ink (9) by means of a printing station (10), with a predefined design and a basis weight of between 20 g/m² and 500 g/m², wherein said second ink (9) has a softening temperature equal to or lower than the softening temperature of the first ink (3) on side C1 of the glass.

5. The method according to the preceding claim, wherein the second ink (9) deposited on side C2 is an ink which, after thermal treatment, provides a chromatic, gold plating, silver plating, mica-based metal plating, lustre, acid, matte, gloss, satin matte effect, or a mixture thereof.

6. The method according to any of claims 3 and 4, wherein the second ink (9) deposited on side C2 is an ink which, after the second thermal treatment, provides technical effects such as a conductive, dielectric, electroluminescent, photoluminescent, bactericidal, viricidal, non-slip, anti-reflective, anti-tracking, and infrared light reflection property, among others.

7. The method according to any one of the preceding claims, wherein the first (3) and second (9) inks deposited on the sides C1 and C2 are printed by means of ink-jet, airbrush, roller, veil application, screen printing, or bell printing stations, or combinations thereof.

8. The method according to claims 1 to 4, wherein after the step of introducing the glass in a furnace (5), performing the first thermal treatment, and turning it over (V), the following additional steps are performed:
a. printing a third ink with adhesive properties (11) on side C2 of the glass (2) by means of a third ink-jet, airbrush, roller, or screen printing station (12), with a predefined design and a basis weight of between 20 g/m² and 200 g/m²;
b. depositing crushed frit particles (13) on the third ink with adhesive properties (11) by means of a particle deposition station (14), with a predefined design and a basis weight of between 100 g/m² and 700 g/m², wherein the crushed frit particles have a diameter of between 1 micrometre and 300 micrometres and a softening temperature equal to or lower than the softening temperature of the first ink (3) deposited on side C1 of the glass.

9. The method according to claims 1 to 4, wherein after the step of depositing a second ink (9) on side C2 of the glass (2), and before the final thermal treatment, the following additional steps are performed:
a. printing a third ink with adhesive properties (11) on side C2 of the glass (2) by means of a third ink-jet, airbrush, roller, or screen printing station (12), with a predefined design and a basis weight of between 20 g/m² and 200 g/m²;
b. depositing crushed frit particles (13) on side C2 of the glass (2) by means of a particle deposition station (14), with a predefined design and a basis weight of between 100 g/m² and 700 g/m², wherein the crushed frit particles have a diameter of between 1 micrometre and 300 micrometres and a softening temperature equal to or lower than the softening temperature of the first ink (3).

10. The method according to any of claims 8 and 9, wherein the printing of the third ink with adhesive properties (11) and the deposition of the crushed frit particles (13) are performed by means of digital ink printing and dry particle deposition equipment.

11. The method according to any of the preceding claims, wherein the first ink (3), second ink (10), and third ink (11) deposited on the sides C1 and C2 are printed with the same ink-jet printing station (4).

12. The method according to any of the preceding claims, wherein the ink-jet printing stations (4, 10, and 12) discharge droplets of a fixed or variable volume on the side of the glass (2), and the volume of which droplets is preferably comprised between 3 and 200 picolitres.

13. The method according to any of the preceding claims, wherein after printing the first ink (3) and/or applying the coating (6), the glass is introduced in a drying station (15) and (16) at a temperature of between 45°C and 250°C.

14. The method according to any of the preceding claims, wherein after printing the first ink (3) and/or applying the coating (6), the glass is subjected to drying and/or curing with a lamp emitting infrared radiation and/or a lamp emitting ultraviolet radiation.

15. The method according to any of the preceding claims, wherein the thermal treatments are performed in the same furnace.

16. Glass decorated on both sides (2a) obtained according to the method described according to any of the preceding claims.

17. Glass decorated on both sides (2a) manufactured according to the preceding claims, intended for the automotive, electrical appliance, architectural, bottle, and glass sectors, among others.
